# EUROPEAN PATENT APPLICATION

(11) **EP 4 765 580 A1**
(43) Date of publication of application: **24.06.2026**
(21) Application number: 25225596.3
(22) Date of filing: 19.12.2025
(51) Int. Cl.: H02J 50/12, H01F 38/14, H02J 50/60

(54) **WIRELESS CHARGING SYSTEM AND WIRELESS POWER TRANSMITTING DEVICE**

(30) Priority: 20.12.2024 US 202463736613 P; 16.10.2025 TW 114139978
(71) Applicant: Voltraware Semiconductor Co., LTD., 235 New Taipei City (TW)
(72) Inventor: HSU, Jr Uei, 235 New Taipei City (TW); HUANG, Pei-Wei, 235 New Taipei City (TW); HUANG, Cheng Yang, 235 New Taipei City (TW); HSU, Tzu Yu, 235 New Taipei City (TW); HUNG, Ming Shun, 235 New Taipei City (TW); SHEN, Yu Hao, 235 New Taipei City (TW)
(74) Representative: Cristinelli, Luca

(57) **Abstract**

A wireless power transmitting device comprises a first coil structure and a control circuit. The first coil structure comprises a first circuit board and a plurality of turns of a coil conductor arranged on the first circuit board. The coil conductor comprises at least one first capacitor structure. Linear distance between the first capacitor structure and an output terminal of the coil conductor is shorter than the linear distance between the first capacitor structure and an input terminal of the coil conductor. Position of the first capacitor structure does not overlap with position of the output terminal. The control circuit measures the first coil structure to determine a power transfer value and determine whether a foreign object has entered a power transmission range between the wireless power transmitting device and the receiving device according to the power transfer value.

## Description

### BACKGROUND

### Field of Invention

This disclosure relates to a wireless charging system and a wireless power transmitting device having coil structures, and in particular to an electromagnetic resonant wireless charging system and wireless power transmitting device having capacitor structures arranged in the coil structures.

### Description of Related Art

In the well-known technologies, wireless power transfer (WPT) devices usually use inductive coupling for charging. The inductive coupling may make transmitter (TX) and receiver (RX) of a WPT device overheat or hardware damage easily due to excessive energy transmission caused by intrusion of the foreign object. Therefore, the related technologies are often combined with foreign object detection (FOD) technology.

The well-known FOD technology usually requires to arrange multiple small sensing coils between the transmitter and receiver to sense the impact of the foreign objects on magnetic field distribution or power transmission. These small sensing coils not only increase the complexity of the hardware structure but also raise the manufacturing costs.

How to solve the problems caused by the small sensing coils mentioned above while enabling wireless charging systems to implement FOD technology, is an important issue the technicians in this field must deal with.

### SUMMARY

The present disclosure provides a wireless power transmitting device. The wireless power transmitting device comprises a first coil structure and a control circuit. The first coil structure comprises a first circuit board and a plurality of turns of a coil conductor arranged on the first circuit board. The coil conductor comprises at least one first capacitor structure, a linear distance between the first capacitor structure and an output terminal of the coil conductor is shorter than a linear distance between the first capacitor structure and an input terminal of the coil conductor, and a position of the first capacitor structure does not overlap with a position of the output terminal. The control circuit is coupled to the first coil structure. The wireless power transmitting device is configured to transmit power to a receiving device through the first coil structure. The control circuit is configured to measure the first coil structure to obtain a power transfer value, and to determine whether a foreign object has entered a power transmission range between the wireless power transmitting device and the receiving device according to the power transfer value.

The present disclosure provides a wireless charging system. The wireless charging system comprises a transmitting device and a receiving device. The transmitting device comprises a first coil structure and a first control circuit. The first coil structure comprises a first circuit board and a plurality of turns of a first coil conductor arranged on the first circuit board. The first coil conductor comprises at least one first capacitor structure. A linear distance between the first capacitor structure and an output terminal of the first coil conductor is shorter than a linear distance between the first capacitor structure and an input terminal of the first coil conductor. A position of the first capacitor structure does not overlap with a position of the output terminal. The first control circuit is coupled to the first coil structure. The receiving device comprises a second coil structure. The second coil structure comprises a second circuit board and a plurality of turns of a second coil conductor arranged on the second circuit board. The second coil conductor comprises at least one second capacitor structure. A linear distance between the second capacitor structure and an output terminal of the second coil conductor is shorter than a linear distance between the second capacitor structure and an input terminal of the second coil conductor. A position of the second capacitor structure does not overlap with a position of the output terminal. The transmitting device is configured to transmit power to the receiving device through the first coil structure and the second coil structure. The first control circuit is configured to measure the first coil structure to obtain a power transfer value, and to determine whether a foreign object has entered a power transmission range between the transmitting device and the receiving device according to the power transfer value.

In summary, the wireless power transmitting device in the present disclosure enables the electromagnetic field of the coil structure to resonate with the capacitor structure by configuring a capacitor structure in the coil structure of the transmitting unit, thereby giving the coil structure a higher quality factor (Q factor). Therefore, a significant change in the power transfer value would be produced when the foreign object enters the power transmission range. By detecting the change in the power transfer value, the wireless power transmitting device can accurately detect the foreign object.

Furthermore, when implementing the foreign object detection, the wireless power transmitting device in the present disclosure does not require any small sensing coil between the transmitter and receiver, which allows for a simpler hardware structure and significantly reduces manufacturing costs.

### BRIEF DESCRIPTION OF THE DRAWINGS

Fig. 1A is a schematic diagram of a wireless charging system according to an embodiment of the present disclosure.
Fig. 1B is a schematic diagram of the wireless charging system of the embodiment of Figure 1A when a foreign object conductor exists.
Fig. 2A is a schematic diagram of a coil structure according to an embodiment of the present disclosure.
Fig. 2B is a schematic diagram of a coil conductor according to an embodiment of the present disclosure.
Fig. 3A is a schematic diagram of a conductor according to an embodiment of the present disclosure.
Fig. 3B is a schematic diagram of a capacitor structure according to an embodiment of the present disclosure.
Fig. 3C is a schematic diagram of a capacitor structure according to an embodiment of the present disclosure.
Fig. 3D is a schematic diagram of a capacitor structure according to an embodiment of the present disclosure.
Fig. 4A is a schematic diagram of a capacitor structure and an additional capacitor structure according to an embodiment of the present disclosure.
Fig. 4B is a schematic diagram of a capacitor structure and an additional capacitor structure according to an embodiment of the present disclosure.

### DETAILED DESCRIPTION

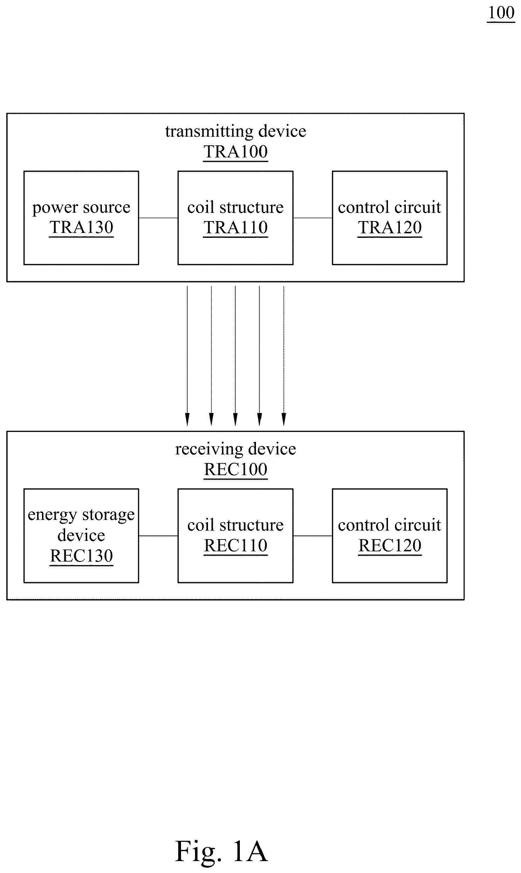

Referring to Figs. 1A, Fig. 1A is a schematic diagram of a wireless charging system 100 according to an embodiment of the present disclosure. The wireless charging system 100 comprises a transmitting device TRA 100 and a receiving device REC 100.

The transmitting device TRA100 can be a device for wirelessly charging the receiving device REC100. The receiving device REC100 can be any device that needs to be charged, such as consumer electronic devices like mobile phones or laptops, or autonomous vehicles such as rail-guided or rail-free automated guided vehicles (AGVs) and drones.

In some embodiments, the transmitting device TRA100 and receiving device REC100 can be applied to special environments where no personnel are required to operate them, such as unmanned factories. Through this wireless charging system 100, the automated guided vehicles mentioned above can autonomously move into a power transmission range of the transmitting device TRA100 for wireless charging, enabling the automated guided vehicles to operate automatically without any interruption.

In the embodiment of Fig. 1A, the transmitting device TRA100 comprises a control circuit TRA110, a coil structure TRA120 and a power source TRA130. The receiving device REC100 comprises a control circuit REC110, a coil structure REC120 and an energy storage device REC130.

In the transmitting device TRA100, the power source TRA130 can provide electric power, and the coil structure TRA120 within the transmitting device TRA100 can wirelessly charge the transmitting device TRA100.

The power source TRA130 can be any type of battery or generator to provide direct current or alternating current. The power source TRA130 may comprise power source management circuit to regulate the transmission voltage and current transmitted by the transmitting device TRA100 to the receiving device REC100.

The transmitting device TRA100 can transmit power by electromagnetic resonance through the coil structure REC120 to the receiving device REC100 having the coil structure REC120. In some embodiments, the transmitting device TRA100 can implement magnetic resonance charging of the receiving device REC100 through a resonant frequency of 6.78MHz.

Specifically, the principle of electromagnetic resonance wireless charging technology is to tune the resonant coils in the coil structure TRA120 of the power transmitting device TRA100 and the coil structure REC120 of the receiving device REC100 to the same resonant frequency, and then perform wireless charging by transmitting energy through a magnetic resonance coupling mechanism without physical contact.

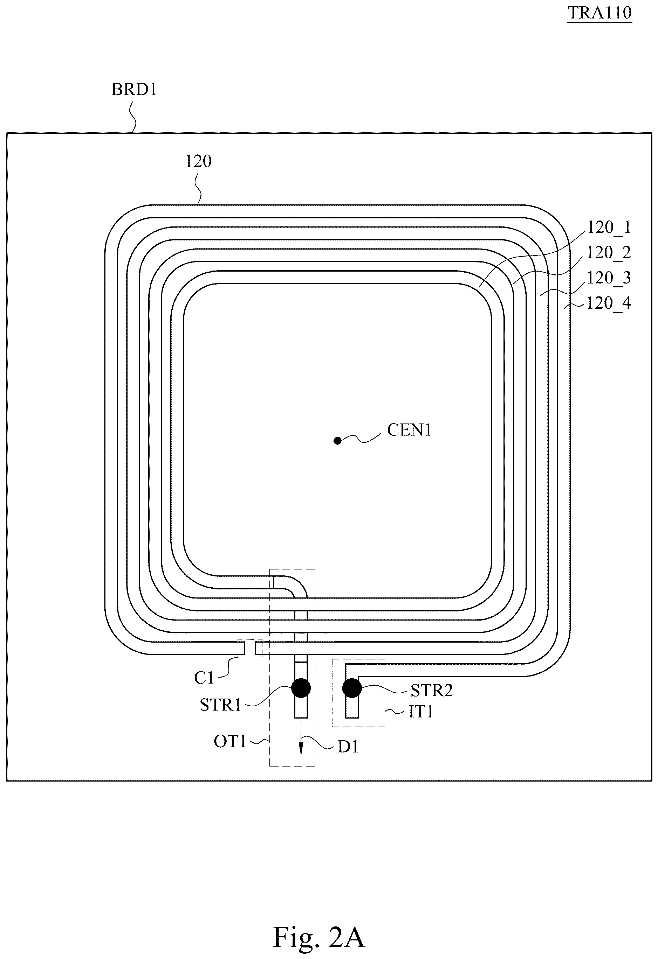

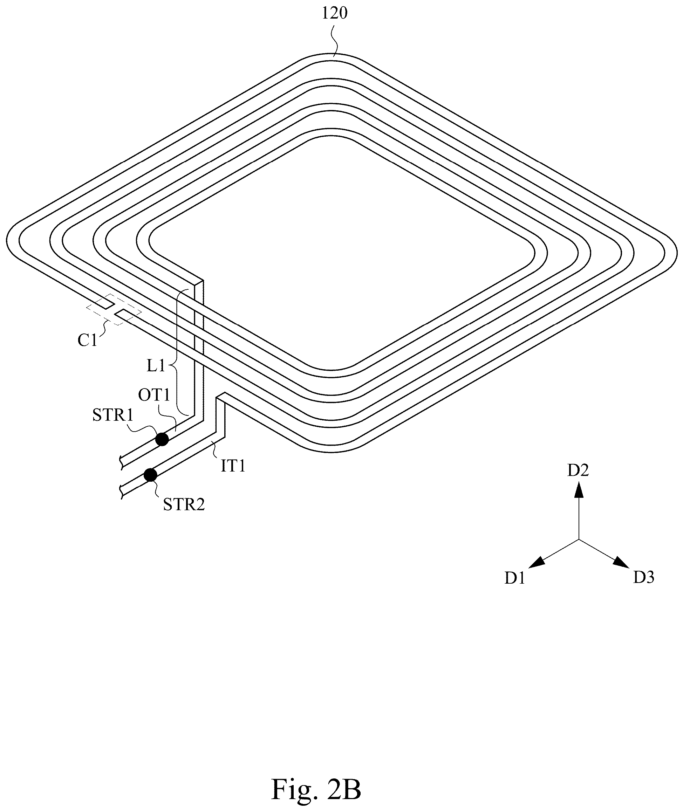

The coil structure TRA120 of the transmitting device TRA100 can convert electrical power into a magnetic field to wirelessly transmit energy to the coil structure REC120 of the receiving device REC100. The structure and arrangement of the coil structure TRA120 are shown in Figs. 2A and 2B.

Referring to Figs. 1A, 2A and 2B, Fig. 2A is a schematic diagram of a coil structure TRA 120 according to an embodiment of the present disclosure, Fig. 2B is a schematic diagram of a coil conductor 120 according to an embodiment of the present disclosure.

As shown in Fig. 2A, the coil structure TRA120 is consisted by a first circuit board BRD1 and the coil conductor 120.

The first circuit board BRD1 can be a fixed medium, such as a printed circuit board (PCB). The coil conductor 120 can be formed by forming a plurality of turns relative to a position (e.g., center point CEN1 in Fig. 2A), and the position of the plurality of turns is fixed by the first circuit board BRD1.

The shape of the coil conductor 120 may be circular, quadrilateral, octagonal, or any other shape, and can be adjusted according to different usage scenarios. The amount of the coil turns is not limited (e.g., 4, 8, 16, 32, etc.). The coil conductor 120 in Fig. 2A is a quadrilateral and has coil turns 120_1-120_4 only for the convenience of illustrating the configuration of the coil structure TRA120, but it does not indicate that the coil conductor 120 must be quadrilateral or the amount of coil turns of the coil conductor 120 must be four. The coil conductor 120 may comprise an input terminal IT1 and an output terminal OT1. The input terminal IT1 and the output terminal OT1 are respectively connected to the two terminals of the coil conductor 120, configured to let the current flow through the plurality of coil turns. The input terminal IT1 may be connected to one terminal of the plurality of coil turns (e.g., the innermost coil turn). The output terminal OT1 may be connected to the other terminal of the plurality of coil turns (e.g., the outermost coil turn).

In some embodiments, the input terminal IT1 is connected to the coil turn 120_4 and extends along a first direction D1, as shown in Fig. 2A. In these embodiments, the output terminal OT1 is connected to the coil turn 120_1, passes through the coil turns 120_1-120_4 from the bottom of the coils, and extends along the first direction D1, or outwardly from the innermost coil to the outermost coil turn.

In other embodiments, the input terminal IT1 is connected to coil turn 120_4 and extends along a second direction D2 which is perpendicular to the first direction D1, as shown in Fig. 2B. In these embodiments, the output terminal OT1 is connected to coil turn 120_1 and likewise extends along the second direction D2. Assuming the coil turns 120_1-120_4 are arranged on a first plane in space, the second direction D2 may be considered perpendicular to the first plane.

In further embodiments, the input terminal IT1 may extend along the first direction D1, and the output terminal OT1 may extend along the second direction D2 (not shown).

A capacitor structure may be arranged on one of the outermost coil turn of the plurality of turns of coil conductor 120. As shown in the embodiment of Fig. 2A, the "outermost coil turn" can be the coil turn 120_4, a first capacitor structure C1 may be arranged on the coil turn 120_4. The coil turn 120_4 may have at least one dielectric material, such as paper, nylon, polystyrene, Teflon, ceramic, silicon, silicone oil, etc. If the dielectric material is a non-solid or non-liquid substance (such as air), a gap may be formed on the coil turn 120_4, and the first capacitor structure C1 may be formed correspondingly on the gap.

It is worth mentioning that the first capacitor structure C1 and the coil conductor 120 are integrally formed.

In different embodiments, the first capacitor structure C1 can be changed accordingly by replacing the fixed medium with different materials or adjusting the size of the gap.

As shown in Fig. 2A, the linear distance between the first capacitor structure C1 and the output terminal OT1 is shorter than the linear distance between the first capacitor structure C1 and the input terminal IT1, and the position of the first capacitor structure C1 on the coil does not overlap with the position of each coil extending from the output terminal OT1.

In one embodiment, the first capacitor structure C1 is not necessarily limited to the coil turn 120_4 of the coil conductor 120, but can also be arranged on any position of the coil turns 120_1-120_3, as long as the linear distance of the position where the first capacitor structure C1 is arranged relative to the output terminal OT1 is shorter than the linear distance of the position where the first capacitor structure C1 is arranged relative to the input terminal IT1, the technical effect described in this disclosure can be achieved. Furthermore, the amount of the first capacitor structures C1 arranged on the coil conductor 120 can be multiple, and the amount is not limited.

During the wireless charging, current flows through the coil conductor 120. Because the first capacitor structure C1 is arranged on the coil turn 120_4, the parasitic capacitive coupling effect on the coil can be effectively reduced, and the stray electric fields caused by parasitic capacitance can be suppressed, therefore, the overall electric field intensity on the coil structure TRA120 can be reduced. Furthermore, the first capacitor structure C1 can form an inductor-capacitor resonance (LC resonance) circuit with the coil conductor 120, enabling the coil structure TRA120 to have a higher quality factor and contributing to improved energy focusing efficiency and magnetic field stability.

Referring to Figs 1A and 2A again, the control circuit TRA110 of the transmitting device TRA100 can be configured to detect the wireless power transmission process from the coil structure TRA120 to the coil structure REC120 and adjust the transmission voltage of the coil structure TRA120.

Specifically, the control circuit TRA110 may comprise a single-chip processor, microcontroller or any processor to enable the coil structure TRA120 to generate or adjust the magnetic field it emits. Furthermore, the control circuit TRA110 may be further connected to measuring terminals STR1 and STR2. The measuring terminal STR1 is arranged on the output terminal OT1, and the measuring terminal STR2 is arranged on the input terminal IT1. Through the measuring terminals STR1 and STR2, the control circuit TRA110 can be coupled to the coil structure TRA120 and measure the coil structure TRA120 to determine a power transfer value.

In some embodiments, the power transfer value may be the voltage level or phase difference between the input terminal IT1 and the output terminal OT1. In other embodiments, the power transfer value may also be the current flowing through the coil conductor 120 of the coil structure TRA120.

In the embodiments mentioned above, the control circuit TRA110 may set a reference value and compare the power transfer value with the reference value to determine whether a foreign object has entered a power transmission range between the transmitting device TRA100 and the receiving device REC100.

In some embodiments, the reference value may be a voltage or current value corresponding to the power transfer value. The reference value may be set according to the first capacitor structure C1 in the placement environment of the transmitting device TRA100 and a capacitance of the first capacitor structure C1. The reference value is related to the electromagnetic capacitance resonance between the first capacitor structure C1 and coil structure TRA120.

When a foreign object enters the power transmission range between the transmitting device TRA100 and the receiving device REC100, the foreign object may disturb the electromagnetic field within the power transmission range, causing a shift in the LC resonant frequency of the coil structure TRA120 and the coil structure REC120. As a result, the equivalent inductance and equivalent impedance of the system can be changed, which is further reflected in changes of voltage and current.

Therefore, the control circuit TRA110 can detect the change in the power transfer value (voltage and current) and compare the power transfer value with the reference value to determine whether a foreign object has entered the power transmission range.

In different environments, such as when the transmitting device TRA100 is arranged on an insulating, metallic or conductive material, the equivalent inductance or equivalent impedance of the coil structure TRA120 may change due to environmental differences, causing a shift in the reference value. By adjusting the capacitance of the first capacitor structure C1, the transmitting device TRA100 can recalibrate the reference value in these different operating environments to maintain a stable LC resonant frequency and ensure that the power transfer values measured by the measuring terminals STR1 and STR2 can still determine the existing of a foreign object accurately, thereby maintaining the reliability of the foreign object detection.

It is worth mentioning that, in the various embodiments of the present disclosure, the specific structure of the coil structure REC120 of the receiving device REC100 is the same as the structure of the coil structure TRA120 of the transmitting device TRA100. Figs. 2A and 2B can be configured to represent the coil structure REC120, which may also have a coil conductor 120 and a first capacitor structure C1 arranged on a coil conductor 120.

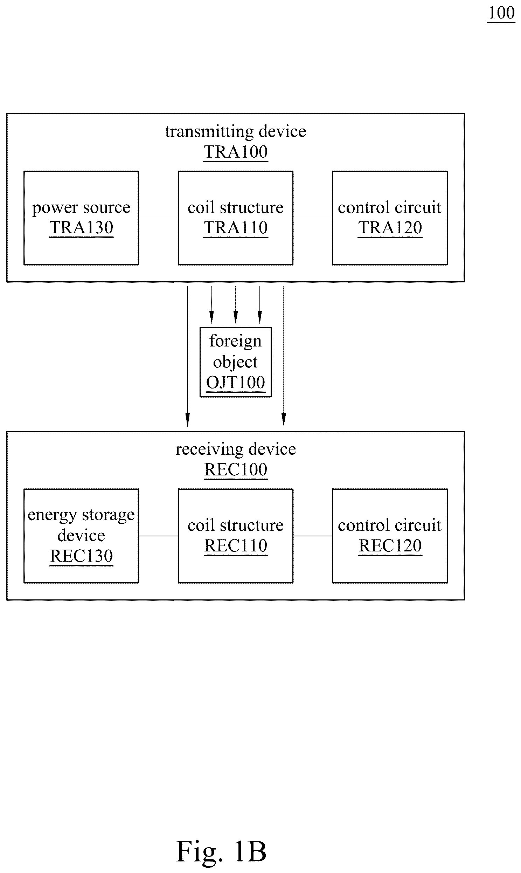

Furthermore, in one embodiment (e.g., Fig. 1B), when the control circuit TRA110 determines that a foreign object (e.g., the foreign object OJT100) has entered the power transmission range, the control circuit TRA110 may enable the power source TRA130 to stop supplying power to the coil structure TRA120 or continue to supply power while simultaneously providing a signal that marked a foreign object has entered the power transmission range.

In summary, the wireless charging system 100 can form resonance between the electromagnetic field of the coil structure TRA120 and the first capacitor structure C1 by arranging the first capacitor structure C1 in the coil structure TRA120 of the transmitting device TRA100. This results in a higher quality factor for the coil structure TRA120, allowing a significant change in power transfer value when a foreign object OJT100 enters the power transmission range. By detecting the change in power transfer value, the wireless charging system 100 can accurately detect the foreign object.

When implementing the foreign object detection, the wireless charging system 100 does not require any small sensing coil between the transmitting device TRA100 or the receiving device REC100, which makes the wireless charging system 100 have a simpler hardware structure and can significantly reduce its manufacturing cost.

Furthermore, since the wireless charging system 100 applies the electromagnetic resonance wireless power transmission technology, it is inherently less prone to overheating due to the existence of the foreign object OJT100. However, the arrangement mentioned above can still further enhance security and reliability, and avoid the impact of the foreign object OJT100 interference on wireless charging efficiency.

It is hereby further clarified that the foreign object detection technology in the present disclosure determines whether a foreign object has entered the power transmission range between the transmitting device TRA100 and the receiving device REC100 by comparing the change in the power transfer value with a reference value. In some embodiments, the wireless charging system 100 only needs to identify the existence of a foreign object without identifying the specific position of the foreign object in the transmission range, and then selects whether to stop power supply by the control circuit TRA110, thereby ensuring the system safety. In other embodiments, the coil structure TRA120 can be replaced with a segmented coil structure or multiple measuring terminals can be arrange on the coil structure TRA120 to detect the specific position of the foreign object in the transmission range. Hhowever, these embodiments are not essential technical requirements of this disclosure.

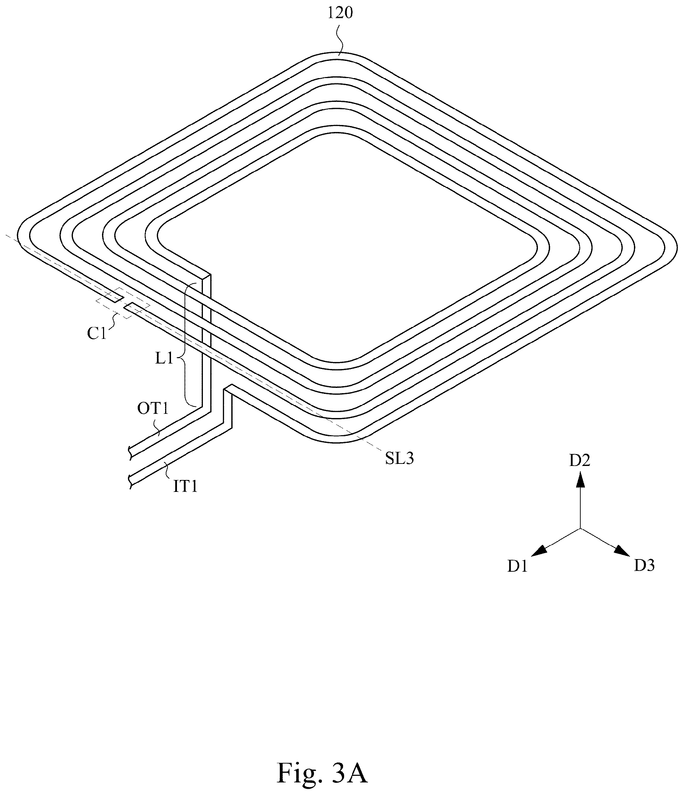

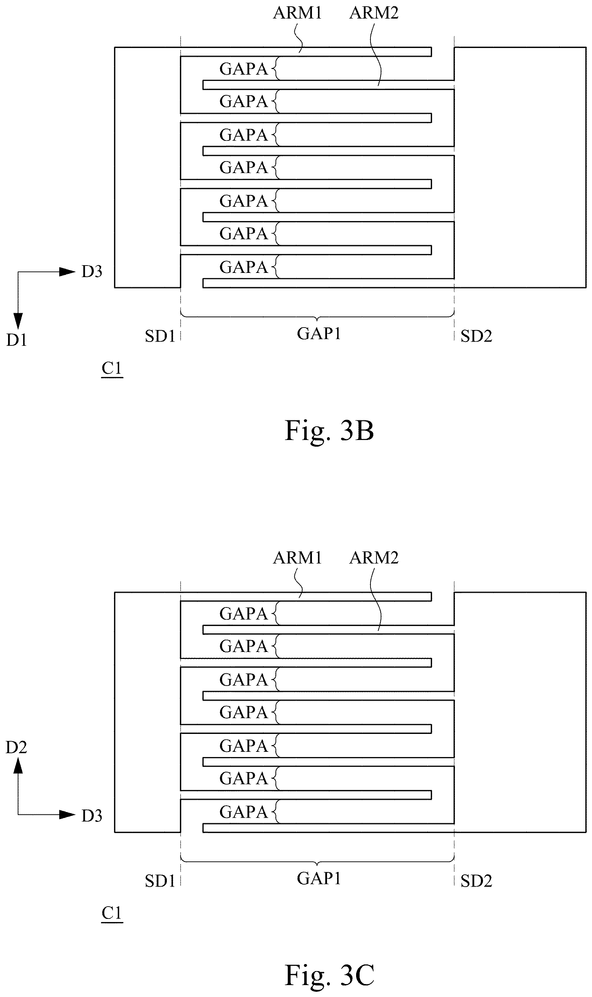

Referring to Figs. 3A-3D, Fig. 3A is a schematic diagram of a coil conductor 120 according to an embodiment of the present disclosure. Figs. 3B-3D are schematic diagrams of the first capacitor structure C1 according to different embodiments of the present disclosure.

The coil conductor 120 in Fig. 3A may correspond to the coil conductor 120 in Fig. 2A. The coil conductor 120 in Fig. 3A is also arranged on the circuit board 110.

In Fig. 3A, three different directions are indicated: a first direction D1, a second direction D2, and a third direction D3. The first direction D1, the second direction D2, and the third direction D3 are perpendicular to each other and may be regarded as the three axes of three-dimensional space. The plurality of coil turns of the coil conductor 120 are arranged on the first plane, which is a two-dimensional plane defined by the first direction D1 and the third direction D3. The input terminal IT1 and the output terminal OT1 are both at a length L1 from the plurality of coil turns along the second direction D2, and both extend along the first direction D1.

In Fig. 3B, the first capacitor structure C1 comprises a plurality of first connecting arms ARM1 and a plurality of second connecting arms ARM2. Each of the first connecting arms ARM1 extends from a first side SD1 of a first gap GAP1, and each of the second connecting arms ARM2 extends from a second side SD2 of the first gap GAP1. The length of each first connecting arm ARM1 and the length of each second connecting arm ARM2 are less than the distance from the first side SD1 to the second side SD2 of the first gap GAP1. The first connecting arms ARM1 and the second connecting arms ARM2 are alternately arranged. A distance between each first connecting arm ARM1 and an adjacent second connecting arm ARM2 is defined as a first spacing GAPA. The first connecting arms ARM1 and the second connecting arms ARM2 may function as capacitor elements in the coil structure 100.

In some embodiments, all the first spacings GAPA between the plurality of first connecting arms ARM1 and the plurality of second connecting arms ARM2 have the same width.

In other embodiments, the plurality of first spacings GAPA may have different widths depending on different usage requirements. In other words, the distances between the first connecting arms ARM1 and the second connecting arms ARM2 may be different. By providing the first spacings GAPA with different widths, the first capacitor structure C1 may have different capacitance values.

It is worth noting that, in the embodiment of Fig. 3B, the circuit board 110 is arranged on the first plane defined by the first direction D1 and the third direction D3, and each of the first connecting arms ARM1 and each of the second connecting arms ARM2 are alternately arranged on the first plane.

The first capacitor structure C1 in Fig. 3C, like the first capacitor structure C1 in Fig. 3B, comprises a plurality of first connecting arms ARM1 and a plurality of second connecting arms ARM2. In Fig. 3C, each of the first connecting arms ARM1 and each of the second connecting arms ARM2 are also alternately arranged.

The difference is that the first connecting arms ARM1 and the second connecting arms ARM2 in Fig. 3C are alternately arranged along the second direction D2 perpendicular to the first plane. Fig. 3A shows a section line SL3 extending along a third direction D3, and Fig. 3C is a cross-sectional view diagram of the first capacitor structure C1 in Fig. 3A along the section line SL3.

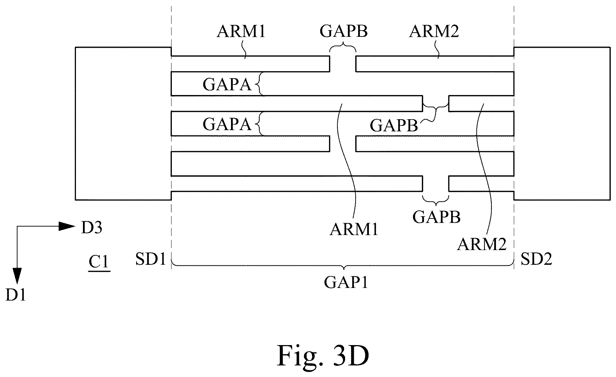

In Fig. 3D, the first capacitor structure C1 also comprises a plurality of first connecting arms ARM1 and a plurality of second connecting arms ARM2, and the first connecting arms ARM1and the second connecting arms ARM2 may function as capacitor elements.

Each of the first connecting arms ARM1 extends from the first side SD1 of the first gap GAP1, and each of the second connecting arms ARM2 extends from the second side SD2 of the first gap GAP1.

Adjacent two of the first connecting arms ARM1 are spaced apart by the first spacing GAPA, and adjacent two of the second connecting arms ARM2 are spaced apart by the first spacing GAPA. Each of the first connecting arm ARM1 is aligned with a corresponding second connecting arm ARM2 along the third direction D3 and spaced apart by a second spacing GAPB. Specifically, sum of the length of each first connecting arm ARM1, the length of the corresponding second connecting arm ARM2, and the length of the second spacing GAPB equals the length of the first gap GAP1.

The second spacing GAPB between each of the first connecting arms ARM1 and the corresponding one of the second connecting arms ARM2 is not aligned with the second spacing GAPB between an adjacent one of the first connecting arms ARM1 and another corresponding one of the second connecting arms ARM2 along the first direction D1. That is, any two adjacent second spacings GAPB are not aligned in the first direction D1.

In some embodiments, lengths of adjacent two of the first connecting arms ARM1 may be different, and lengths of adjacent two of the second connecting arms ARM2 may also be different, so that the adjacent second spacings GAPB are alternately arranged rather than aligned.

It is worth noting that, in the embodiment of Fig. 3D, the circuit board 110 is arranged on the first plane defined by the first direction D1 and the third direction D3, and the second spacings GAPB between the first connecting arms ARM1 and the second connecting arms ARM2 are alternately arranged on the first plane.

In other embodiments, the plurality of second spacings GAPB separating the first connecting arm ARM1 and the second connecting arm ARM2 are alternately arranged along the second direction D2, and the second direction D2 is perpendicular to the first plane. In these embodiments, FIG. 3D can be regarded as a cross-sectional view diagram of the first capacitor structure C1 in Fig. 3A along section line SL3.

Across the embodiments in Figs. 3B-3D, the structure of the connecting arms in these embodiments can effectively disperse the electric field in the coil structure, reduce the local voltage in the coil, and thus suppress the formation of hot spots and avoid local concentration of the electric field.

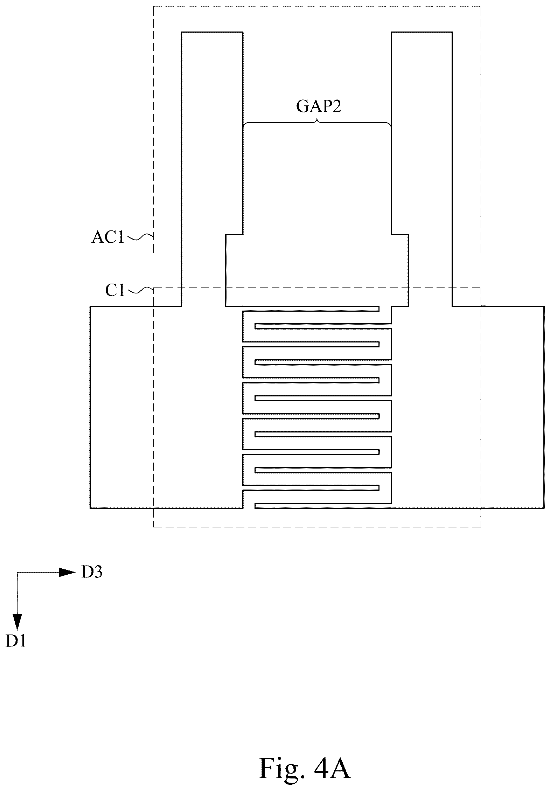

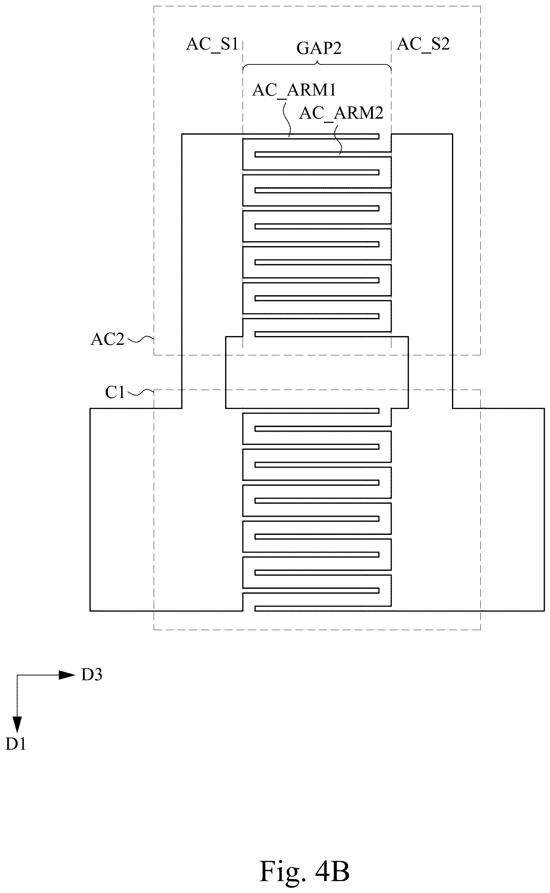

Referring to Figs. 3A, 3B, 3A, and 4B, Fig. 4A is a schematic diagram of a capacitor structure C1 and an additional capacitor structure AC1 according to an embodiment of the present disclosure, Fig. 4B is a schematic diagram of a capacitor structure C1 and an additional capacitor structure AC2 according to an embodiment of the present disclosure.

To increase the capacitance variation of capacitor structures, additional capacitor structures may be provided. Taking the first capacitor structure C1 in Fig. 3B as an example, if one wants to increase the capacitance variation of the first capacitor structure C1, an additional capacitor structure may be added to the first capacitor structure C1 to provide the structure shown in the embodiment of Fig. 4A or Fig. 4B.

In Fig. 4A, the additional capacitor structure AC1 can function as a capacitor element on the coil turn 120_1 through the arrangement of the second gap GAP2. The additional capacitor structure AC1 can be connected in parallel with the first capacitor structure C1, and the additional capacitor structure AC1, the first capacitor structure C1, and the coil turn 120_1 are integrally formed.

A dielectric layer may be formed within the second gap GAP2, and any dielectric material used to fill the dielectric layer can be any material with a dielectric constant, thereby adjusting the capacitance density of the additional capacitor structure AC1 without increasing the physical size of the additional capacitor structure AC1 itself.

By adding the additional capacitor structure AC1, the capacitive impedance of the coil turn 120_1 can be adjusted to achieve the purpose of adjusting capacitance variation.

In FIG. 4B, the additional capacitor structure AC2 comprises a plurality of first connecting arms AC_ARM1 and a plurality of second connecting arms AC_ARM2. Each of the first connecting arms AC_ARM1 extends from a first side AC_SD1 of the second gap GAP2, and each of the second connecting arms AC_ARM2 extends from a second side AC_SD2 of the second gap GAP2. The lengths of the first connecting arms AC_ARM1 and the lengths of the second connecting arms AC_ARM2 are less than the distance from the first side AC_SD1 to the second side AC_SD2 of the second gap GAP2.

The first capacitor structure C1 in Fig. 4B may correspond to the first capacitor structure C1 of the coil turn 120_1 in Fig. 3A. The additional capacitor structure AC2 in Fig. 4B may be arranged on the coil structure 100 in Fig. 3A and connected in parallel with the first capacitor structure C1 in Fig. 3A. Furthermore, the circuit board 110 is arranged on the first plane defined by the first direction D1 and the third direction D3, and each of the first connecting arms AC_ARM1 and each of the second connecting arms AC_ARM2 are alternately arranged along the third direction D3 on the first plane.

In summary, the wireless charging system 100 of the present disclosure can implement resonance between the electromagnetic field of the coil structure TRA120 and the first capacitor structure C1 by arranging the first capacitor structure C1 in the coil structure TRA120 of the transmitting device TRA100, thereby giving the coil structure TRA120 a higher quality factor (Q factor). Therefore, a significant change in the power transfer value would be produced when the foreign object OJT100 enters the power transmission range. By detecting the change in the power transfer value, the wireless charging system 100 can accurately detect the foreign object

When implementing the foreign object detection, the wireless charging system 100 does not require any small sensing coil between the transmitting device TRA100 and the receiving device REC100, which allows the wireless charging system 100 to have a simpler hardware structure and significantly reduce its manufacturing cost.

## Claims

1. A wireless power transmitting device (TRA100), **characterized by** comprising:
a first coil structure (TRA110), comprising a first circuit board (BRD1) and a plurality of turns (120_1-120_4) of a coil conductor (120) arranged on the first circuit board, wherein the coil conductor comprises at least one first capacitor structure (C1), a linear distance between the first capacitor structure and an output terminal (OT1) of the coil conductor is shorter than a linear distance between the first capacitor structure and an input terminal (IT1) of the coil conductor, and a position of the first capacitor structure does not overlap with a position of the output terminal; and
a control circuit (TRA120), coupled to the first coil structure (TRA110);
wherein the wireless power transmitting device (TRA100) is configured to transmit power to a receiving device (REC100) through the first coil structure (TRA110), the control circuit (TRA120) is configured to measure the first coil structure (TRA110) to obtain a power transfer value, and to determine whether a foreign object (OJT100) has entered a power transmission range between the wireless power transmitting device (TRA100) and the receiving device (REC100) according to the power transfer value.

2. The wireless power transmitting device (TRA100) of claim 1, wherein in response to the control circuit determining that the foreign object has entered the power transmission range, the wireless power transmitting device stops supplying power to the first coil structure.

3. The wireless power transmitting device (TRA100) according to any one of claims 1 to 2, wherein the power transfer value is a voltage between the input terminal to the output terminal or a current flowing through the coil conductor.

4. The wireless power transmitting device (TRA100) according to any one of claims 1 to 3, wherein the control circuit is further configured to:
set a reference value according to the first capacitor structure in a placement environment of the wireless power transmitting device and a capacitance of the first capacitor structure; and
compare the power transfer value with the reference value to determine whether the foreign object exists within the power transmission range.

5. The wireless power transmitting device (TRA100) according to any one of claims 1 to 4, wherein a first gap (GAP1) is formed on the coil conductor of the wireless power transmitting device, the first capacitor structure is formed by the first gap.

6. The wireless power transmitting device (TRA100) according to any one of claims 1 to 5, wherein the first capacitor structure and the coil conductor are integrally formed.

7. The wireless power transmitting device (TRA100) of claim 5, wherein,
the first capacitor structure (C1) comprises a plurality of first connecting arms (ARM1) and a plurality of second connecting arms (ARM2),
the first connecting arms (ARM1) extend from a first side (SD1) of the first gap (GAP1), the second connecting arms (ARM2) extend from a second side (SD2) of the first gap (GAP1),
each of the first connecting arms (ARM1) is spaced apart from a corresponding one of the second connecting arms (ARM2) by a first spacing (GAPA), lengths of the first connecting arms (ARM1) and the second connecting arms (ARM2) are less than a distance from the first side to the second side of the first gap, and
the first connecting arms (ARM1) and the second connecting arms (ARM2) are alternately arranged.

8. The wireless power transmitting device (TRA100) of claim 7, wherein the first circuit board is arranged on a first plane, and each of the first connecting arms (AMR1) and the second connecting arms (ARM2) are alternately arranged on the first plane.

9. The wireless power transmitting device (TRA100) of claim 7, wherein the first circuit board is arranged on a first plane, the first connecting arms (ARM1) and the second connecting arms (ARM2) are alternately arranged along a second direction (D2), and the second direction (D2) is perpendicular to the first plane.

10. The wireless power transmitting device (TRA100) of claim 7, wherein widths of the first spacings (GAPA) are not identical.

11. The wireless power transmitting device (TRA100) of claim 5, wherein,
the first capacitor structure comprises a plurality of first connecting arms (ARM1) and a plurality of second connecting arms (ARM2),
the first connecting arms (ARM1) extend from a first side (SD1) of the first gap (GAP1), the second connecting arms (ARM2) extend from a second side (SD2) of the first gap (GAP1),
each of the first connecting arms (ARM1) is spaced apart by a first spacing (GAPA), each of the second connecting arms (ARM2) is spaced apart by the first spacing (GAPA),
each of the first connecting arms (ARM1) is spaced apart from a corresponding one of the second connecting arms (ARM2) by a second spacing (GAPB), and adjacent two of the second spacings (GAPB) are not aligned along a first direction (D1).

12. The wireless power transmitting device (TRA100) of claim 1, wherein the coil conductor further comprises an additional capacitor structures (AC1, AC2), the additional capacitor structure (AC1, AC2) is connected in parallel with the first capacitor structure (C1).

13. The wireless power transmitting device (TRA100) of claim 12, wherein the additional capacitor structures (AC1, AC2) comprises a second gap (GAP2), wherein the first capacitor structure (C1-C4, C11-C14), the additional capacitor structures(AC1, AC2), and the coil conductor (120_1-120_4) are integrally formed.

14. The wireless power transmitting device (TRA100) of claim 13, wherein,
the additional capacitor structure (AC2) comprises a plurality of first connecting arms (AC_ARM1) and a plurality of second connecting arms (AC_ARM2),
the first connecting arms (AC_ARM1) extend from a first side (AC_SD1) of the second gap (GAP2), the second connecting arms (AC_ARM2) extend from a second side (AC_SD2) of the second gap (GAP2), and
the first connecting arms (AC_ARM1) and the second connecting arms (AC_ARM2) are alternately arranged.

15. A wireless charging system (100), **characterized by** comprising:
a transmitting device (TRA100), comprising:
a first coil structure (TRA110), comprising a first circuit board (BRD1) and a plurality of turns (120_1-120_4) of a first coil conductor (120) arranged on the first circuit board, wherein the first coil conductor comprises at least one first capacitor structure (C1), a linear distance between the first capacitor structure and an output terminal (OT1) of the first coil conductor is shorter than a linear distance between the first capacitor structure and an input terminal (IT1) of the first coil conductor, and a position of the first capacitor structure does not overlap with a position of the output terminal; and
a first control circuit (TRA120), coupled to the first coil structure; and
a receiving device (REC100), comprising:
a second coil structure (REC110), comprising a second circuit board and a plurality of turns of a second coil conductor arranged on the second circuit board, wherein the second coil conductor comprises at least one second capacitor structure, a linear distance between the second capacitor structure and an output terminal of the second coil conductor is shorter than a linear distance between the second capacitor structure and an input terminal of the second coil conductor, and a position of the second capacitor structure does not overlap with a position of the output terminal;
wherein the transmitting device (TRA100) is configured to transmit power to the receiving device (REC100) through the first coil structure **(TRA110)** and the second coil structure (REC110), the first control circuit (TRA120) is configured to measure the first coil structure to obtain a power transfer value, and to determine whether a foreign object (OJT100) has entered a power transmission range between the transmitting device (TRA100) and the receiving device (REC100) according to the power transfer value.
